# FASCICULE DE BREVET EUROPEEN

(11) **EP 1 902 894 B1**
(45) Date de publication et mention de la délivrance du brevet: **01.05.2019**
(21) Numéro de dépôt: 07291100.1
(22) Date de dépôt: 14.09.2007
(51) Int. Cl.: B60L 3/00

(54) **Véhicule ferroviaire équipé de contacteurs, procédé de commande et utilisation de ces contacteurs**
Mit Schaltern ausgestattetes Schienenfahrzeug; Verfahren zur Steuerung und zur Verwendung dieser Schalter
Railway vehicle equipped with contactors, method of controlling and using these contactors

(30) Priorité: 21.09.2006 FR 0608270
(43) Date de publication de la demande: 26.03.2008
(73) Titulaire: ALSTOM Transport Technologies, 93400 Saint-Ouen (FR)
(72) Inventeur: Cypers, David, 65310 Odos (FR); Desportes, Guillaume, 65700 Maubourguet (FR); Giacomoni, Olivier, 65290 Juillan (FR)
(74) Mandataire: Lavoix

(56) Documents cités:
- EP-A1- 0 718 143
- GB-A- 2 304 990
- JP-A- 5 153 702
- US-A- 4 547 769

## Description

La présente invention concerne un véhicule ferroviaire équipé de contacteurs, un procédé de commande et l'utilisation de ces contacteurs.

Il est prévu de réaliser des véhicules ferroviaires comportant :
- un moteur polyphasé équipé d'une borne de raccordement électrique pour chaque phase du moteur et d'un rotor à aimants permanents propre à entraîner en rotation les roues motrices du véhicule ferroviaire,
- un onduleur polyphasé propre à délivrer une tension polyphasée d'alimentation du moteur, cet onduleur étant équipé d'une borne de raccordement pour chaque phase, et
- au moins un contacteur commandable pour chaque phase du moteur, ce contacteur étant équipé d'au moins deux électrodes électriquement raccordées, respectivement, à une borne respective de l'onduleur et à une borne respective du moteur, ces deux électrodes étant basculables entre un état non-passant dans lequel elles isolent électriquement l'une de l'autre les bornes de l'onduleur et du moteur auxquels elles sont raccordées et un état passant dans lequel elles raccordent électriquement ces deux bornes, les deux électrodes étant séparées par une distance inter-électrode D dans l'état non-passant.

Le document EP 0 718 143 A1 divulgue un tel véhicule ferroviaire.

Dans la suite de cette description, les moteurs équipés d'un rotor à aimants permanents sont appelés « moteurs à aimants permanents ».

Contrairement aux moteurs dépourvus d'aimant permanent, tel que la plupart des moteurs asynchrones, un moteur à aimants permanents peut générer du courant même lorsque ses bobinages au stator ne sont plus alimentés par l'onduleur polyphasé. Ainsi, en cas de défaillance de l'onduleur, il est nécessaire de pouvoir isoler électriquement le moteur à aimants permanents de l'onduleur. Toutefois, les caractéristiques de la tension et du courant polyphasés circulant entre l'onduleur et le moteur à aimants permanents sont singulièrement différentes des caractéristiques de la tension et du courant polyphasés alimentant d'autres moteurs et en particulier les moteurs dépourvus d'aimants permanents.

Par exemple, suite à certaines défaillances de l'onduleur, le courant dans chacune des phases peut avoir à la fois une composante continue et une composante alternative non nulle. En particulier, cette situation se produit dans le cas d'une défaillance connue sous le terme de « court-circuit asymétrique ». Ce court-circuit est qualifié d'« asymétrique » car l'amplitude de la composante continue du courant dans la phase en défaut n'est pas la même que l'amplitude de la composante continue du courant dans les autres phases. Plus précisément, dans le cas d'un court-circuit asymétrique, l'amplitude de la composante continue dans la phase en défaut est supérieure à l'amplitude de la composante alternative, de sorte que le courant dans cette phase ne s'annule jamais. De plus, généralement, l'amplitude de la composante continue est très élevée, c'est-à-dire supérieure à 250 ampères et typiquement supérieure ou égale à 700 ampères.

Enfin, lors d'un court-circuit asymétrique, la fréquence de la composante alternative peut être très élevée, c'est-à-dire que cette fréquence peut être le double de celle rencontrée habituellement avec un moteur asynchrone de puissance équivalente. On estime que la fréquence de la tension polyphasée rencontrée dans le cas d'un moteur asynchrone dépourvu d'aimant permanent, utilisé pour tracter un véhicule ferroviaire, ne dépasse jamais 200 hertz et se situe plus classiquement en dessous de 60 hertz. Lors d'un court-circuit asymétrique, la fréquence de la composante alternative peut être supérieure à 400 Hz.

On connait par ailleurs, des commutateurs à ampoule à faible pression, par exemple d'après le document GB 2 304 990 A ou le document JP 5 153 702 A, qui divulgue l'utilisation de tels commutateurs dans un véhicule ferroviaire. Le document US 4 547 769 A divulgue des commutateurs à ampoule à faible pression et à électrode mobile.

L'invention vise à proposer un véhicule ferroviaire dans lequel le moteur à aimants permanents peut être électriquement isolé de l'onduleur en particulier en cas de court-circuit asymétrique.

L'invention a donc pour objets un véhicule ferroviaire et un procédé de commande selon les revendications.

Il a été établi que de façon surprenante des contacteurs à ampoules ayant la propriété ci-dessus permettent d'isoler électriquement le moteur à aimants permanents de l'onduleur même en cas de court-circuit asymétrique. Plus précisément, il est généralement admis qu'un contacteur ayant un produit pression * distance inter-électrode à gauche du minimum de la courbe de Paschen peut uniquement couper un courant alternatif qui s'annule. Par conséquent, à priori, un tel contacteur devrait être inapproprié pour son utilisation avec un moteur à aimants permanents puisque lorsqu'un court-circuit asymétrique se produit, le courant dans la phase en défaut ne s'annule jamais. De plus, ce courant dans la phase en défaut présente une composante continue dont l'intensité est généralement très élevée. Or, il a été découvert que cet à priori est faux.

L'une des hypothèses avancée pour expliquer ce comportement inattendu est la suivante. Le courant qui circule dans les autres phases que celles en défaut s'annulent périodiquement. Ainsi, l'un des contacteurs de l'une des phases qui n'est pas en défaut s'ouvre dès le prochain passage à zéro du courant. Ensuite, les courants s'équilibrent entre les deux phases restantes, c'est-à-dire celles correspondant aux contacteurs encore fermés. Cette situation conduit à la disparition de la composante continue dans le courant de la phase en défaut. Dès lors, même le courant de la phase en défaut s'annule périodiquement. Les deux contacteurs s'ouvrent donc dès le prochain passage à zéro de leur courant de phase respectif.

De plus, à performances égales, notamment en termes de pouvoir de coupure et/ou de rapidité d'ouverture, l'encombrement de tels commutateurs à ampoules est nettement inférieur (c'est-à-dire typiquement au moins deux fois plus petit), que ceux des contacteurs réalisés en utilisant d'autres technologies.

Enfin, de tels contacteurs sont également aptes à couper des courts-circuits symétriques.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un véhicule ferroviaire équipé d'un moteur à aimants permanents,
- la figure 2 est une illustration schématique d'un contacteur à ampoule sous vide utilisé dans le véhicule de la figure 1, et
- la figure 3 est un organigramme d'un procédé de commande de contacteurs à ampoules sous vide du véhicule ferroviaire de la figure 1.

Dans la suite de cette description, les caractéristiques et fonctions bien connues de l'homme du métier ne sont pas décrites en détail.

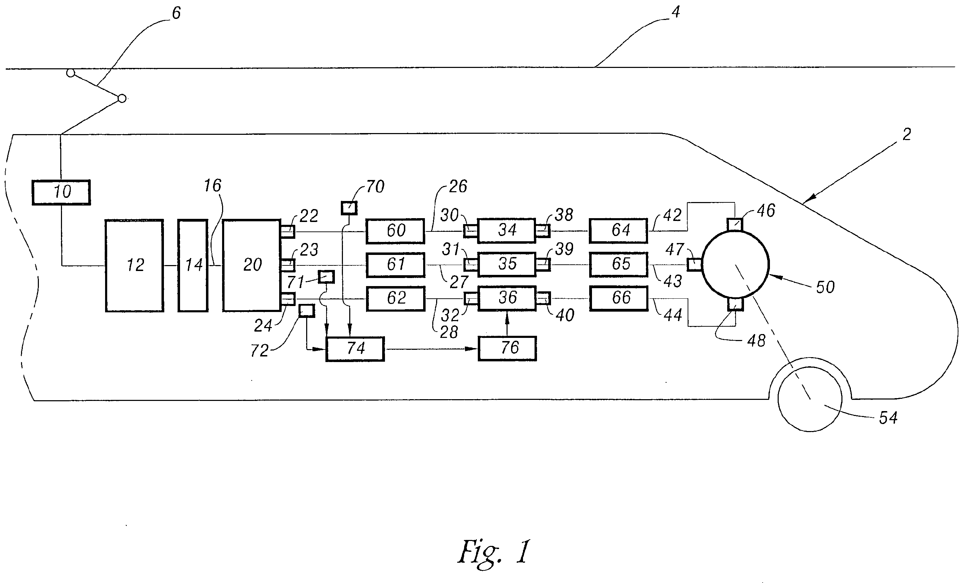

La figure 1 représente un véhicule ferroviaire 2 tel qu'un train.

Ce véhicule 2 est électriquement raccordé à une caténaire 4 par l'intermédiaire d'un pantographe 6.

Par exemple, le véhicule 2 comporte, successivement raccordés en série, un disjoncteur 10, un transformateur 12 et un redresseur 14 de manière à délivrer sur un bus DC 16 une tension et un courant continu généré à partir de la tension reçue par l'intermédiaire du pantographe 6.

Un onduleur/redresseur 20 est électriquement raccordé entre les conducteurs du bus 16. Cet onduleur/redresseur 20 est équipé de trois bornes 22 à 24 de raccordement électrique. L'onduleur/redresseur 20 fournit ou reçoit une tension triphasée par l'intermédiaire des bornes 22 à 24. Plus précisément, l'onduleur/redresseur 20 fonctionne en onduleur lorsqu'il fournit sur les bornes 22 à 24 une tension triphasée et fonctionne en redresseur lorsqu'il reçoit sur les bornes 22 à 24 une tension triphasée à redresser puis à délivrer sur le bus 16.

L'onduleur/redresseur 20, est apte à fournir ou à redresser une tension de fréquence variable. Ici, la fréquence de la tension triphasée reçue ou fournie sur les bornes 22 à 24 varie entre 0 et plus de 400 hertz. Par exemple, la fréquence de la tension triphasée est comprise entre 0 et 450 hertz.

Chaque borne 22 à 24 est raccordée par l'intermédiaire d'un conducteur amont, respectivement 26 à 28, à une borne d'entrée, respectivement 30 à 32, d'un contacteur monophasé, respectivement 34 à 36.

Chacun de ces contacteurs monophasés 34 à 36 comporte une borne de sortie, respectivement 38 à 40, électriquement raccordée par l'intermédiaire de conducteurs électriques avals, respectivement 42 à 43, à une borne respective de raccordement, respectivement 46 à 48, d'un moteur synchrone 50 à aimants permanents. Le moteur 50 comprend un rotor équipé d'aimants permanents. Ce rotor est apte à entraîner en rotation une ou plusieurs roues motrices du véhicule 2 ou à être entraîné en rotation par ces roues motrices. Pour simplifier la figure 1, seule une roue motrice 54 a été représentée.

Des dispositifs de filtrage des gradients importants de tension dus aux préamorçages multiples ou aux préallumages multiples sont prévus autour de chacun des conducteurs 26 à 28 et 42 à 44. Par gradients importants on désigne un gradient supérieur à 10 kV/µs. Par exemple, ici, des ferrites 60 à 62 et 64 à 66 sont disposés autour, respectivement, des conducteurs 26 à 28 et 42 à 44. Ces ferrites sont spécialement adaptées pour supprimer les gradients importants de tension générés lors de la fermeture et lors de l'ouverture des contacteurs 34 à 36.

Par exemple, ces ferrites sont réalisées conformément à l'enseignement de la demande de brevet déposée sous le numéro FR 98 08 207 le 29 juin 1998 par la société Alstom. En particulier, la partie résistive de chacune de ces ferrites est dominante aux fréquences générées pendant la fermeture des contacteurs 34 à 36.

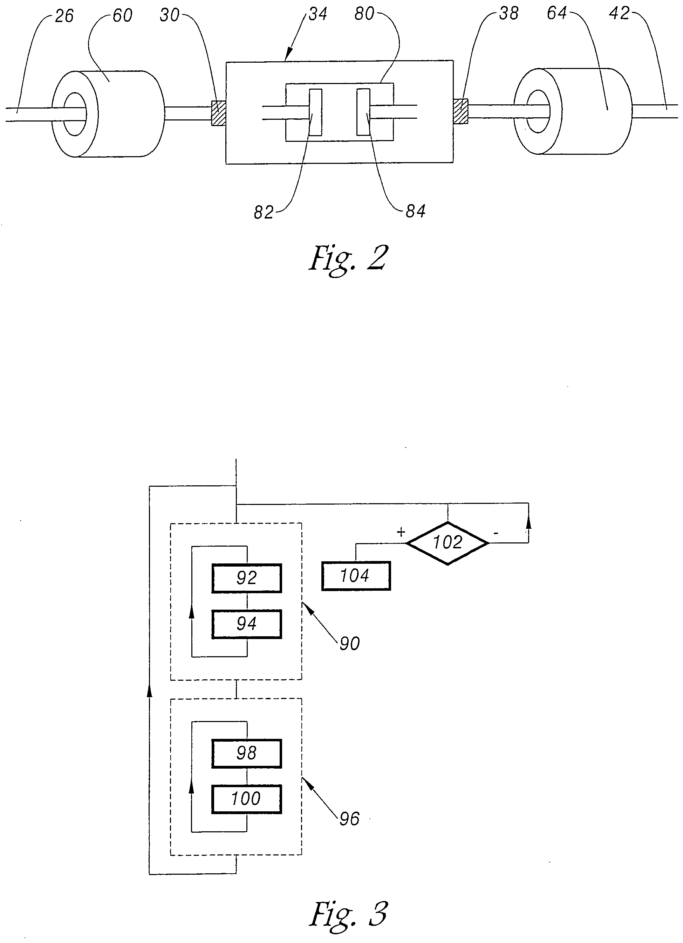

Les contacteurs 34 à 36 seront décrits plus en détail en regard de la figure 2.

Le véhicule 2 comporte également des capteurs 70 à 72, des courants de phase dans chacun des conducteurs 26 à 28. Ces capteurs sont raccordés à un détecteur 74 propre à détecter un court-circuit asymétrique à partir des valeurs de courant mesurées par les capteurs 70 à 72.

Ce détecteur 74 est raccordé à une unité 76 de commande de l'ouverture des contacteurs 34 à 36.

Les contacteurs 34 à 36 sont identiques les uns aux autres. La figure 2 représente plus en détail le contacteur 34. Le contacteur 34 est déplaçable entre une position ouverte dans laquelle il isole électriquement le conducteur 26 du conducteur 42, et une position fermée dans laquelle il raccorde électriquement le conducteur 26 au conducteur 42.

Le contacteur 34 comporte une ampoule 80 formant une enceinte hermétique à l'intérieur de laquelle une faible pression est réalisée. Ici, par faible pression on désigne une pression inférieure à 10⁻² millibars (1 pascal) et pouvant atteindre 10⁻⁷ millibars (10⁻⁵ Pa).

Deux électrodes 82 et 84 sont placées en vis-à-vis à l'intérieur de l'ampoule 80. Ces électrodes 82 et 84 sont basculables entre un état passant et un état non-passant et vice-versa. A cet effet, au moins l'une de ces deux électrodes est déplaçable entre une position active dans laquelle elle est électriquement en contact avec l'électrode 84 et une position rétractée dans laquelle elle est électriquement isolée de l'électrode 84. Dans sa position active, qui correspond à l'état passant, les bornes 30 et 38 sont électriquement raccordées l'une à l'autre tandis que dans sa position rétractée, qui correspond à l'état non-passant, les bornes 30 et 38 sont électriquement isolées l'une de l'autre. Dans sa position rétractée, les électrodes 82 et 84 sont séparées l'une de l'autre par une distance inter-électrode D.

La pression P et la distance D sont choisies de manière à ce que le produit de la pression P multiplié par la distance D se situe à gauche du minimum de la courbe de Paschen. On rappelle que la courbe de Paschen représente l'évolution de la valeur de la tension de claquage (« Sparking Voltage » en anglais) en fonction du produit de la pression P par la distance inter-électrode, à une température constante. Cette courbe de Paschen peut être définie dans différents gaz, tels que l'air, l'azote ou autre.

Ici, le contacteur 34 est un contacteur à ampoules sous vide. Ces contacteurs sont connus sous le terme anglais de « Vacuum Switch ».

Le contacteur 34 est ici adapté pour couper un courant alternatif dont l'intensité est supérieure à 300 A et dont la composante fondamentale a une fréquence supérieure ou égale à 450 hertz. Des contacteurs à ampoules sous vide ayant ces propriétés sont déjà disponibles sur le marché.

On remarquera sur la figure 2, que les ferrites 60 et 64 sont diposées respectivement autour des conducteurs 26 et 42 tout en étant électriquement isolées de ces conducteurs 26 et 42. Les ferrites 60 et 64 sont également disposées aussi proches que possible des électrodes 82 et 84.

Le fonctionnement du véhicule 2 va maintenant être décrit en regard du procédé de la figure 3.

Lors d'une phase 90 de fonctionnement normal en traction, l'onduleur/redresseur 20 fournit, lors d'une étape 92, une tension triphasée sur les bornes 22 à 24. La fréquence de cette tension triphasée est, par exemple, déterminée automatiquement par un mécanisme d'asservissement du couple du moteur 50.

En réponse à cette tension triphasée, lors d'une étape 94, le moteur 50 produit un couple de traction correspondant à la consigne de traction de sorte que le véhicule 2 est tracté.

La phase 90 alterne avec une phase 96 de fonctionnement normal en générateur.

Lors de la phase 96, lors d'une étape 98, le rotor du moteur 50 est entraîné en rotation par les roues du véhicule 2. Ici, lors de l'étape 98, le moteur 50 génère une tension triphasée sur les conducteurs 42 à 44.

Lors d'une étape 100, cette tension triphasée est redressée par l'onduleur/redresseur 20 et transmise sous la forme d'une tension et d'un courant continu sur le bus 16. L'énergie électrique ainsi générée par le moteur 50 est alors, par exemple, retransmise sur la caténaire 4 ou utilisée à l'intérieur du véhicule 2 pour alimenter des équipements électriques. Cette énergie électrique peut également être dissipée par un rhéostat.

En parallèle des phases 90 et 96, lors d'une étape 102, le détecteur 74 vérifie en permanence l'existence d'un court-circuit asymétrique à partir des valeurs de courant mesurées par les capteurs 70 à 72.

Si un court-circuit asymétriques est détecté lors de l'étape 102, alors l'unité 76 procède immédiatement à une étape 104 de commande de l'ouverture des contacteurs 34 à 36 de manière à isoler électriquement le moteur 50 de l'onduleur 20.

De nombreux autres modes de réalisation sont possibles. Par exemple, le détecteur 74 et l'unité de commande 76 peuvent être regroupés dans un seul et même composant.

Ce qui a été décrit ici s'applique également aux moteurs polyphasés ayant plus de trois phases et plus généralement à tout moteur polyphasé propre à générer un courant périodique lorsque son rotor est entraîné en rotation et sans qu'il soit nécessaire pour cela d'alimenter au moins un bobinage de ce moteur.

Ici, les contacteurs 34 et 36 ont été décrits dans le cas particulier où le basculement de la position ouverte vers la position fermée et vice-versa est déclenchée en modifiant la distance inter-électrode D. En variante, le basculement de la position ouverte vers la position fermée peut être déclenchée en modifiant la pression P. Dans cette dernière variante, la distance inter-électrode D peut être constante.

## Revendications

1. Véhicule ferroviaire comportant :
- un moteur polyphasé (50) équipé d'une borne (46-48) de raccordement électrique pour chaque phase du moteur et d'un rotor à aimants permanents propre à entraîner en rotation les roues motrices du véhicule ferroviaire,
- un onduleur polyphasé (20) propre à délivrer une tension polyphasée d'alimentation du moteur, cet onduleur étant équipé d'une borne (22-24) de raccordement pour chaque phase, et
- au moins un contacteur (34-36) commandable pour chaque phase du moteur, ce contacteur étant équipé d'au moins deux électrodes électriquement raccordées, respectivement, à une borne respective de l'onduleur et à une borne respective du moteur, ces deux électrodes étant basculables entre un état non-passant dans lequel elles isolent électriquement l'une de l'autre les bornes de l'onduleur et du moteur auxquels elles sont raccordées et un état passant dans lequel elles raccordent électriquement ces deux bornes, les deux électrodes étant séparées par une distance inter-électrode D dans l'état non-passant, **caractérisé en ce que** chaque contacteur comporte une ampoule à l'intérieur de laquelle règne une pression P dans l'état non-passant, les électrodes étant placées à l'intérieur de cette ampoule et le produit de la pression P par la distance inter-électrode D est à gauche du minimum de la courbe de Paschen, et **en ce que** le véhicule ferroviaire comporte une unité (76) de commande propre à commander l'ouverture des contacteurs (34-36) en présence d'un court-circuit asymétrique, un court-circuit asymétrique étant défini comme une situation dans laquelle le courant dans l'une des phases présente à la fois une composante continue et une composante fondamentale périodique non nulle, l'amplitude de la composante continue étant strictement supérieure à l'amplitude de la composante fondamentale périodique de sorte que le courant ne s'annule jamais dans cette phase.

2. Véhicule selon la revendication 1, dans lequel le véhicule ferroviaire comporte un dispositif (74) de détection d'un court-circuit asymétrique, ce dispositif étant propre à déclencher automatiquement l'ouverture des contacteurs (34-36) dès qu'un court-circuit asymétrique est détecté.

3. Véhicule selon la revendication 1 ou 2, dans lequel l'onduleur (20) est apte à délivrer un courant polyphasé dont la fréquence fondamentale est inférieure à 6 hertz, et dans lequel l'unité de commande est apte à commander l'ouverture des contacteurs même si la fréquence fondamentale du courant polyphasé à couper est inférieure à 6 hertz.

4. Véhicule selon l'une quelconque des revendications précédentes, dans lequel l'onduleur (20) est également apte à faire varier la fréquence de la tension polyphasée délivrée entre 0 et au moins 400 hertz.

5. Véhicule selon l'une quelconque des revendications précédentes, dans lequel le véhicule comporte, pour chaque contacteur, un conducteur électrique amont (26-28) et un conducteur électrique aval (42-44), le conducteur amont raccordant électriquement le contacteur à la borne correspondante de l'onduleur, et le conducteur aval raccordant électriquement le contacteur à la borne correspondante du moteur, et dans lequel au moins une ferrite (60-62, 64-66) est placée autour du(des) conducteur(s) amont et/ou aval.

6. Véhicule selon la revendication 5, dans lequel la partie résistive de chaque ferrite (60-62, 64-66) est supérieure à la partie inductive aux fréquences générées pendant la fermeture du contacteur.

7. Véhicule selon l'une quelconque des revendications précédentes, dans lequel la pression P est systématiquement inférieure à 1 Pa lors du fonctionnement du contacteur.

8. Véhicule selon l'une quelconque des revendications précédentes, dans lequel au moins une des deux électrodes est déplaçable, lors du fonctionnement du contacteur, entre une position dans laquelle elle est électriquement en contact avec l'autre électrode, de manière à obtenir l'état passant, et une position rétractée dans laquelle elle est électriquement isolée de l'autre électrode de sorte à obtenir l'état non-passant.

9. Procédé de commande de contacteurs dans un véhicule conforme à l'une quelconque des revendications 1 à 8, **caractérisé en ce que** l'on commande (104) l'ouverture des contacteurs (34-36) en présence d'un court-circuit asymétrique, un court-circuit asymétrique étant défini comme une situation dans laquelle le courant dans l'une des phases présente à la fois une composante continue et une composante fondamentale périodique non nulle, l'amplitude de la composante continue étant strictement supérieure à l'amplitude de la composante fondamentale périodique de sorte que le courant ne s'annule jamais dans cette phase.

## Patentansprüche

1. Schienenfahrzeug, aufweisend:
- einen mehrphasigen Motor (50), welcher mit einer elektrischen Anschlussklemme (46-48) für jede Phase des Motors und einem Rotor mit Permanentmagneten, welcher dazu geeignet ist, die Triebräder des Schienenfahrzeugs in Drehung zu versetzen, ausgestattet ist,
- einen mehrphasigen Inverter (20), welcher dazu geeignet ist, eine mehrphasige Spannung zur Versorgung des Motors zu liefern, wobei dieser Inverter mit einer Anschlussklemme (22-24) für jede Phase ausgestattet ist, und
- mindestens ein Schütz (34-36), welches für jede Phase des Motors steuerbar ist, wobei dieses Schütz mit mindestens zwei Elektroden, welche jeweilig elektrisch mit einer jeweiligen Klemme des Inverters und einer jeweiligen Klemme des Motors verbunden sind, ausgestattet ist, wobei diese zwei Elektroden zwischen einem Nichtleitend-Zustand, in welchem sie die Klemmen des Inverters und des Motors, mit welchen sie verbunden sind, voneinander elektrisch isolieren, und einem Leitend-Zustand, in welchem sie diese zwei Klemmen elektrisch verbinden, kippbar sind, wobei die zwei Elektroden durch einen Inter-Elektroden-Abstand D in dem Nichtleitend-Zustand voneinander getrennt sind,
**gekennzeichnet dadurch, dass** jedes Schütz eine Ampulle aufweist, in deren Inneren ein Druck P in dem Nichtleitend-Zustand vorherrscht, wobei die Elektroden in dem Inneren dieser Ampulle angeordnet sind und das Produkt des Drucks P mit dem Inter-Elektroden-Abstand D links vom Minimum der Paschen-Kurve ist,
und dadurch, dass das Schienenfahrzeug eine Steuereinheit (76) aufweist, welche dazu geeignet ist, die Öffnung der Schütze (34-36) bei Vorhandensein eines asymmetrischen Kurzschlusses zu befehlen, wobei ein asymmetrischer Kurzschluss definiert ist als eine Situation, in welcher der Strom in einer von den Phasen gleichzeitig eine Gleichstromkomponente und eine periodische Grundkomponente ungleich Null aufweist, wobei die Amplitude der Gleichstromkomponente streng größer als eine Amplitude der periodische Grundkomponente ist, so dass der Strom sich nie in dieser Phase auflöst.

2. Fahrzeug gemäß dem Anspruch 1, wobei das Schienenfahrzeug eine Vorrichtung (74) zur Erfassung eines asymmetrischen Kurzschlusses aufweist, wobei diese Vorrichtung dazu geeignet ist, automatisch die Öffnung der Schütze (34-36) auszulösen, sobald ein asymmetrischer Kurzschluss erfasst wird.

3. Fahrzeug gemäß dem Anspruch 1 oder 2, wobei der Inverter (20) dazu eingerichtet ist, einen mehrphasigen Strom, dessen Grundfrequenz kleiner als 6 Hertz ist, zu liefern, und wobei die Steuereinheit dazu eingerichtet ist, die Öffnung der Schütze zu befehlen, selbst wenn die Grundfrequenz des zu unterbrechenden mehrphasigen Stroms kleiner als 6 Hertz ist.

4. Fahrzeug gemäß irgendeinem der vorhergehenden Ansprüche, wobei der Inverter (20) auch dazu eingerichtet ist, die Frequenz der gelieferten mehrphasigen Spannung zwischen 0 und zumindest 400 Hertz variieren zu lassen.

5. Fahrzeug gemäß irgendeinem der vorhergehenden Ansprüche, wobei das Fahrzeug für jedes Schütz einen vorgeschalteten elektrischen Leiter (26-28) und einen nachgeschalteten elektrischen Leiter (42-44) aufweist, wobei der vorgeschaltete Leiter das Schütz mit der zugehörigen Klemme des Inverters elektrisch verbindet, und wobei der nachgeschaltete Leiter das Schütz mit der zugehörigen Klemme des Motors elektrisch verbindet, und wobei mindestens ein Ferrit (60-62, 64-66) um den (die) vorgeschalteten und/oder nachgeschalteten Leiter herum angeordnet ist.

6. Fahrzeug gemäß dem Anspruch 5, wobei der Widerstandsteil jedes Ferrits (60-62, 64-66) größer als der induktive Teil bei während des Schließens des Schützes erzeugten Frequenzen ist.

7. Fahrzeug gemäß irgendeinem der vorhergehenden Ansprüche, wobei der Druck P während des Betriebs des Schützes durchweg kleiner als 1 Pa ist.

8. Fahrzeug gemäß irgendeinem der vorhergehenden Ansprüche, wobei mindestens eine von den zwei Elektroden während des Betriebs des Schützes zwischen einer Position, in welcher sie elektrisch im Kontakt mit der anderen Elektrode ist, so dass der Leitend-Zustand erlangt wird, und einer zurückgezogenen Position, in welcher sie von der anderen Elektrode elektrisch isoliert ist, so dass der Nichtleitend-Zustand erlangt wird, verschiebbar ist.

9. Verfahren zum Steuern von Schützen in einem Fahrzeug, welches irgendeinem der Ansprüche 1 bis 8 entspricht, **gekennzeichnet dadurch, dass** die Öffnung der Schütze (34-36) bei Vorhandensein eines asymmetrischen Kurzschlusses befohlen wird, wobei ein asymmetrischer Kurzschluss definiert ist als eine Situation, in welcher der Strom in einer von den Phasen gleichzeitig eine Gleichstromkomponente und eine periodische Grundkomponente ungleich Null aufweist, wobei die Amplitude der Gleichstromkomponente streng größer als eine Amplitude der periodische Grundkomponente ist, so dass der Strom sich nie in dieser Phase auflöst.

## Claims

1. Rail vehicle comprising:
- a polyphase motor (50) which is provided with an electrical connection terminal (46-48) for each phase of the motor and a rotor which has permanent magnets and which is capable of rotatably driving the driving wheels of the rail vehicle,
- a polyphase inverter (20) which is capable of supplying a polyphase supply voltage of the motor, this inverter being provided with a connection terminal (22-24) for each phase, and
- at least one controllable contactor (34-36) for each phase of the motor, this contactor being provided with at least two electrodes which are electrically connected, respectively, to a respective terminal of the inverter and to a respective terminal of the motor, these two electrodes being able to be moved between a non-conducting state in which they electrically isolate from each other the terminals of the inverter and the motor to which they are connected and a conducting state in which they electrically connect these two terminals, the two electrodes being separated by an inter-electrode spacing D in the non-conducting state, **characterised in that** each contactor comprises a bulb inside which there is a pressure P in the non-conducting state, the electrodes being placed inside this bulb, and the product of the pressure P multiplied by the inter-electrode spacing D is to the left of the minimum of the Paschen curve,
and **in that** the rail vehicle comprises a control unit (76) which is capable of controlling the opening of the contactors (34-36) in the presence of an asymmetrical short-circuit, an asymmetrical short-circuit being defined as a situation in which the current in one of the phases has both a continuous component and a periodic fundamental component which is not equal to zero, the amplitude of the continuous component being strictly greater than the amplitude of the periodic fundamental component so that the current is never cancelled in this phase.

2. Vehicle according to claim 1, wherein the rail vehicle comprises a device (74) for detecting an asymmetrical short-circuit, this device being capable of automatically bringing about the opening of the contactors (34-36) as soon as an asymmetrical short-circuit is detected.

3. Vehicle according to claim 1 or 2, wherein the inverter (20) is capable of supplying a polyphase current whose fundamental frequency is lower than 6 Hertz, and in which the control unit is capable of controlling the opening of the contactors even if the fundamental frequency of the polyphase current to be cut is lower than 6 Hertz.

4. Vehicle according to any one of the preceding claims, wherein the inverter (20) is also capable of varying the frequency of the polyphase voltage supplied between 0 and at least 400 Hertz.

5. Vehicle according to any one of the preceding claims, wherein the vehicle comprises, for each contactor, an upstream electrical conductor (26-28) and a downstream electrical conductor (42-44), the upstream conductor electrically connecting the contactor to the corresponding terminal of the inverter, and the downstream conductor electrically connecting the contactor to the corresponding terminal of the motor, and wherein at least one ferrite (60-62, 64-66) is placed around the upstream and/or downstream conductor (s) .

6. Vehicle according to claim 5, wherein the resistive portion of each ferrite (60-62, 64-66) is greater than the inductive portion at the frequencies generated during the closing of the contactor.

7. Vehicle according to any one of the preceding claims, wherein the pressure P is systematically lower than 1 Pa during the operation of the contactor.

8. Vehicle according to any one of the preceding claims, wherein at least one of the two electrodes can be moved, during the operation of the contactor, between a position in which it is in electrical contact with the other electrode in order to obtain the conductive state and a retracted position in which it is electrically isolated from the other electrode in order to obtain the non-conductive state.

9. Method for controlling contactors in a vehicle in accordance with any one of claims 1 to 8, **characterised in that** the opening of the contactors (34 - 36) is controlled (104) in case of an asymmetrical short-circuit, an asymmetrical short-circuit being defined as a situation in which the current in one of the phases has both a continuous component and a periodic fundamental component which is not equal to zero, the amplitude of the continuous component being strictly greater than the amplitude of the periodic fundamental component so that the current is never cancelled in this phase.
